## Europäisches Patentamt
## European Patent Office
## Office européen des brevets

(11) Publication number: **0 139 533**
**B1**

(12) **EUROPEAN PATENT SPECIFICATION**

(45) Date of publication of patent specification: **16.01.91**

(51) Int. Cl.⁵: **G 02 B 6/28**

(21) Application number: **84307224.0**

(22) Date of filing: **19.10.84**

(54) A Method for switching between Optical cables in a communication line.

(30) Priority: **20.10.83 JP 196914/83**

(43) Date of publication of application:
**02.05.85 Bulletin 85/18**

(45) Publication of the grant of the patent:
**16.01.91 Bulletin 91/03**

(84) Designated Contracting States:
**DE FR GB**

(56) References cited:
**EP-A-0 081 349**
**GB-A-1 540 907**
**US-A-4 083 625**
**US-A-4 184 739**

**LASER FOCUS, vol. 16, no. 5, May 1980, page 83; NEWTON "Maxlight's fiber coupler has 0.6dB insertion loss"**

(73) Proprietor: **THE FURUKAWA ELECTRIC CO., LTD.**
**6-1, 2-chome, Marunouchi Chiyoda-ku**
**Tokyo (JP)**

(72) Inventor: **Miyazaki, Hiroshi Chiba Works The Furukawa Electr**
**Co.,Ltd.,No.6 Yajata-Kaigandori**
**Ichihara-shi-Chiba-Ken (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to an optical cable and an optical cable line composed of the cable.

In a commercial communication line, maintenance and replacement works to be carried out in the alteration of a facility, a start of a branch station, an increase in a unit and an alternation of a route upon execution of a municipal maintenance plan are always conducted frequently, and the switching of cables is always necessary during such work. Since it is necessary to instantaneously execute the switching of channels of cables without momentary disconnection, double channels are provided in the line at the switching time to remedy against the execution of the switching works. In case of a metal communication cable, a branch connection can be readily carried out while the channels are live if the core conductors are exposed by removing the coating of the core wire of the insulated wire, and the double channel can be readily performed in the line.

However, in case of an optical cable, since a continuity cannot be obtained even by contacting the side faces of bare fibres by removing the coatings of the core wires of the optical fibres, it is not simple like a metal cable to prepare the line in double channels while the channels are live. This is a large disadvantage of the optical cable line.

A system for obtaining data from a plurality of condition sensitive optical devices is disclosed in British Patent No. 1,540,907. The system includes a transmitter which sends an optical input signal to each of the optical devices, each device producing an output signal which is the input signal modulated by the device. A single optical fibre is optically coupled at one end to an optical receiver and at the other end to all of the devices. Each device has means by which to discriminate between the optical output signals received from the devices via the optical fibre.

It is an object of this invention to provide an optical cable and an optical cable line composed of the cable which can be readily switched without momentary disconnection.

According to an aspect of this invention, there is provided a method for switching from a connection between a first and a second optical cable in a communication line to that between a first and a third optical cable, said first and second optical cables having at least a first and a second optical fibre core, respectively, two branches being formed at the adjacent connecting ends of the fibre cores, and corresponding branches being connected together, thereby forming a two-channel optical connector between said first and said second optical cables, characterised in that the first optical cable is switched such that it is connected to the third optical cable which has at least a third optical fibre core with two branches formed at the connecting edge thereof, by cutting first one channel of the two-channel connector, forming a new first channel between the first and third cables by connecting one branch of the third cable with the branch core of the first cable available after the cutting of said first channel; cutting the second channel of the two-channel optical connector, and forming a new second channel between the first and third cables by connecting the remaining branch of the third cable with the other branch of the first cable available after the cutting of said second channel, such that the switch is made without completely disconnecting the first optical cable from the communication line.

The above and other related objects and features of the invention will be apparent from a reading of the following description of the disclosure found in the accompanying drawings and the novelty thereof pointed out in the appended claims.

Figs. 1(a), 1(b) and 1(c) are views showing the construction of an embodiment of an optical cable and an optical cable line constructed according to the present invention;

Fig. 2 is a plan view of the branch of the optical fibre core wire used in this embodiment; and

Fig. 3 is a plan view showing another example of the branch of the optical fibre core wire used in this embodiment.

An optical fibre and an optical fibre line of the present invention will now be described in more detail with reference to the accompanying drawings.

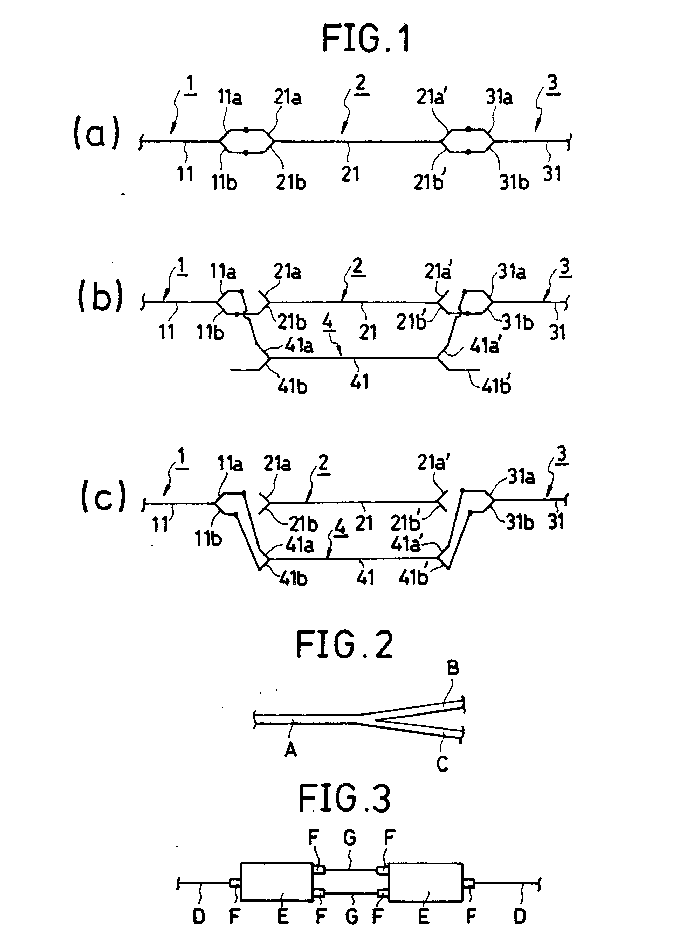

In Figs. 1(a), 1(b) and 1(c), reference numerals 1, 2 and 3 designate optical cables of this invention. The optical cables 1, 2 and 3 are laid in a predetermined route to construct an optical cable line to be described later. These optical cables 1, 2 and 3 respectively have a predetermined number of optical fibre core wires 11, 21 and 31. For the convenience of disclosure in the drawings, only one core wire of each cable is shown, but the present invention is not limited to this particular one core wire. The optical fibre core wires 11, 21 and 31 are respectively divided into two branches at the ends. At one end of each optical fibre core wire 11 and 31 the two branches are omitted for the convenience of disclosure in the drawings.

Reference numerals 11a, 11b, 21a, 21b, 21a', 21b', 31a, 31b respectively designate branched core wires. (In the remainder of the specification, only a single branched core wire will be referred to, although there may be two or more branch core wires). As the branch of the ends of the respective core wires are employed two core wires B, C fusion-bonded at the ends of a core wire A as shown in Fig. 2. The optical cables 1, 2 and 3 which respectively have the optical fibre core wires 11, 21 and 31 are respectively fusion-bonded and connected, for example, between the 11a and 21a, 11b and 21b, 21a' and 31a, 21b' and 31b as shown in Fig. 1(a) between the branch core wires to form optical cable lines. In other words, the optical cable line of the present invention is divided in double channels by the branch core wires at the connectors of the respective cables.

The case that the optical cable 2 is, for example, switched newly to the optical cable in the optical cable line which is constructed as described above will now be described.

As shown in Fig. 1(b), one of the double channels in the connector of the optical fibre core wires 11, 21, e.g., the channel of the branch core wires 11a, 21a are first cut. Similarly, in the connector of the optical fibre core wires 21, 31, one of the double channels, e.g., the channel of the core wires 21a', 31a is cut. In this case, the optical cables 1, 2 are connected by the branch core wires 11b and 21b, the branch core wires 21b' and 31b connect optical cables 2 and 3, and the optical cables 1, 2 and 3 form a continuous connection in the optical cable line. Then, the branch core wire 41a of the one end of the optical fibre core wire 41 of the optical cable 4 to be switched next is connected to the branch core wire 11a of the optical fibre core wire 11 which has been cut. Then, the branch core wire 41a' of the other end of the optical fibre core wire 41 is connected to the branch core wire 31a of the optical cable 3. Thus, after the optical cable 4 to be switched is connected to the optical cables 1, 3, the branch core wires 21b, 21b' of the optical cable 2 are respectively cut from the branch core wire 11b of the optical cable 1 and the branch core wire 31b of the optical cable 3. Further, the branch core wire 41b of the optical cable 4 is connected to the branch core wire 11b of the optical cable 1 and the branch core wire 41b' of the optical cable 4 is connected to the branch core wire 31b of the optical cable 3, thereby completing the switching of the cables as shown in Fig. 1(c).

In the embodiment described above, the branch of the end of the optical fibre core wire is composed by fusion bonding. However, the branch may be, for example, coupled by employing a connector F for an optical branch E at the end of the optical fibre core wire D as shown in Fig. 3. In Fig. 3, reference character G is an optical jumper core wire.

The switching of the optical fiber in the case that the end of the optical fiber core wire is coupled to the optical branch via a connector can be carried out in the same sequence as the case of the first embodiment of this invention merely altering the fusion-bonding to the connector connection, and the detailed description will be omitted.

According to the present invention as described above, the optical cable can readily compose the optical cable line which can be readily switched as desired, and the optical cable line of the invention is formed in the double channel at the connector of the respective optical cables. Therefore, the line can be formed in the double channel by connecting the optical cable to be switched to one of the channels, thereby readily switching the channels without momentary disconnection.

## Claims

1. A method for switching from a connection between a first (1) and a second (2) optical cable in a communication line to that between a first (1) and a third (4) optical cable, said first and second optical cables having at least a first (11) and a second (21) optical fibre core, respectively, two branches (11a, 11b; 21a, 21b) being formed at the adjacent connecting ends of the fibre cores (11, 21), and corresponding branches (11a, 21a; 11b, 21b) being connected together, thereby forming a two-channel optical connector between said first (1) and said second (2) optical cables, characterised in that

the first optical cable (1) is switched such that it is connected to the third optical cable (4) which has at least a third optical fibre core (41) with two branches (41a, 41b) formed at the connecting edge thereof, by cutting first one channel (11a, 21a) of the two-channel connector, forming a new first channel (11a, 41a) between the first (1) and third (4) cables by connecting one branch (41a) of the third cable (4) with the branch core (11a) of the first cable (1) available after the cutting of said first channel (11a, 21a); cutting the second channel (11b, 21b) of the two-channel optical connector, and forming a new second channel (11b, 41b) between the first (1) and third (4) cables by connecting the remaining branch (41b) of the third cable (4) with the other branch (11b) of the first cable (1) available after the cutting of said second channel (11b, 21b), such that the switch is made without completely disconnecting the first optical cable (1) from the communication line.

2. A method according to claim 1, wherein:
the first, second and third optical cables (1, 2, 4) are multi-core cables, and each of the fibre cores (11) of the first optical cable (1) is disconnected from the corresponding fibre core (21) of the second optical cable (2) and connected to a corresponding fibre core (41) of the third optical cable (4).

3. A method according to claim 1 or 2, wherein:
the branches (11a, 11b; 21a, 21b) comprise two optical fibre branch cores (11a, 11b; 21a, 21b) which are fusion bonded to each end of the optical fibre cores (11, 21).

4. A method according to claim 1 or 2, wherein:
the branches comprise optical channels of an optical branch connector.

5. A method according to claim 4, wherein:
the two-channel connector connects each optical channel of a branch connector with the corresponding optical channel of an adjacent branch connector.

6. A method according to claim 5, wherein:
the first and second channels of the two-channel connector comprise respectively, first and second optical fibre jumper cores.

7. A method according to claim 6, wherein:
the first channel of the two-channel connector is cut by disconnecting the first jumper core from the branch connector of the corresponding fibre core of the second cable, and the new first channel is formed by connecting the first jumper core to the branch connector of the corresponding fibre core of the third cable; and

the second channel of the two-channel connector is cut by disconnecting the jumper core from the branch connector of the corresponding fibre core of the second cable, and the new second channel is formed by connecting the second jumper core to the branch connector of the corresponding fibre core of the third cable.

## Patentansprüche

1. Ein Verfahren zum Schalten von einer Verbindung zwischen einem ersten (1) und einem zweiten (2) optischen Kabel in einer Kommunikationsleitung zu einer Verbindung zwischen einem ersten (1) und einem dritten (4) optischen Kabel, wobei das erste und das zweite optische Kabel wenigstens einen ersten (11) bzw. einen zweiten (21) optischen Faserkern aufweisen, jeweils zwei Zweige (11a, 11b; 21a, 21b) an den aneinandergrenzenden Verbindungsenden der Faserkerne (11, 21) gebildet und entsprechende Zweige (11a, 21a; 11b, 21b) miteinander verbunden sind, wodurch sie einen zweikanaligen optischen Verbinder zwischen dem ersten (1) und dem zweiten (2) optischen Kabel bilden, dadurch gekennzeichnet, daß das erste optische Kabel derart geschaltet wird, daß es mit dem dritten optischen Kabel (4), welches wenigstens einen dritten optischen Faserkern (41) mit zwei Zweigen (41a, 41b), die an seinem Verbindungsende gebildet sind, aufweist, durch Trennen eines ersten Kanals (11a, 21a) des Zweikanalverbinders, Bilden eines neuen ersten Kanals (11a, 41a) zwischen dem ersten (1) und dem dritten (4) Kabel durch Verbinden eines Zweiges (41a) des dritten Kabels (4) mit dem Zweigkern (11a) des ersten Kabels (1), der nach dem Trennen des ersten Kanals (11a, 21a) verfügbar ist; durch Trennen des zweiten Kanals (11b, 21b) des zweikanaligen optischen Verbinders, und durch Bilden eines neuen zweiten Kanals (11b, 41b) zwischen dem ersten (1) und dem dritten (4) Kabel durch Verbinden des verbleibenden Zweiges (41b) des dritten Kabels (4) mit dem anderen Zweig (11b) des ersten Kabels (1), das nach dem Trennen des zweiten Kanals (11b, 21b) verfügbar ist, verbunden wird, derart, daß die Schaltung ohne komplette Verbindungstrennung des ersten optischen Kabels von der Kommunikationsleitung durchgeführt wird.

2. Ein Verfahren nach Anspruch 1, wobei das erste, zweite und dritte optische Kabel (1, 2, 4) Vielkernkabel sind und jeder von den Faserkernen (11) des optischen Kabels (1) von dem entsprechenden Faserkern (21) des zweiten optischen Kabels (2) getrennt und mit einem entsprechenden Faserkern (41) des dritten optischen Kabels (4) verbunden wird.

3. Ein Verfahren nach Anspruch 1 oder 2, wobei: die Zweige (11a, 11b; 21a, 21b) zwei optische Zweigfaserkerne (11a, 11b; 21a, 21b) umfassen, welche durch eine Schmelzverbindung mit jedem Ende der optischen Faserkerne (11, 21) verbunden sind.

4. Ein Verfahren nach Anspruch 1 oder 2, wobei: die Zweige optische Kanäle eines optischen Zweigverbinders umfassen.

5. Ein Verfahren nach Anspruch 4, wobei:

der zweikanalige Verbinder jeden optischen Kanal eines Zweigverbinders mit dem entsprechenden optischen Kanal von einem angrenzenden Zweigverbinder verbindet.

6. Ein Verfahren nach Anspruch 5, wobei: der erste und zweite Kanal des Zweikanalverbinders jeweils einen ersten und zweiten Optikfaser-Brückenverbindungskern umfassen.

7. Ein Verfahren nach Anpruch 6, wobei: der erste Kanal des zweikanaligen Verbinders durch Lösen des ersten Brückenverbindungskerns von dem Zweigverbinder des entsprechenden Faserkerns des zweiten Kabels getrennt wird, und der neue erste Kanal durch Verbinden des ersten Brückenverbindungskerns mit dem Zweigverbinder des entsprechenden Faserkerns des dritten Kabels gebildet wird;

und der zweite Kanal des zweikanaligen Verbinders durch Lösen des Brückenverbindungskerns von dem Zweigverbinder des entsprechenden Faserkerns des zweiten Kabels getrennt wird, und der neue zweite Kanal durch Verbinden des zweiten Brückenkerns mit dem Zweigverbinder des entsprechenden Faserkerns des dritten Kabels gebildet wird.

## Revendications

1. Procédé pour commuter pour passer d'une connexion entre un premier (1) et un second (2) câbles optiques dans une ligne de communication à une connexion entre un premier (1) et un troisième (4) câbles optiques, ledit premier et ledit second câbles optiques présentant au moins un premier (11) et un second (21) conducteurs à fibre optique, respectivement, deux branches (11a, 11b; 21a; 21b) étant formées aux extrémités, voisines, de connexion des conducteurs à fibre optique (11, 21) et les branches correspondantes (11a, 21a; 11b, 21b) étant connectées ensemble, formant ainsi un connecteur optique à deux canaux entre ledit premier (1) et ledit second (2) câbles optiques, caractérisé par le fait que

on commute le premier câble optique (1) en le connectant au troisième câble optique (4), qui présente au moins un troisième conducteur à fibre optique (41) avec deux branches (41a, 41b) formées à son bord de connexion, en coupant d'abord un canal (11a, 21a) du connecteur à deux canaux, en formant un nouveau premier canal (11a, 41a) entre le premier (1) et le troisième (4) câbles en connectant une branche (41a) du troisième câble (4) avec le conducteur (11a) de la branche du premier câble (1) qui est disponible après que l'on ait coupé ledit premier canal (11a, 21a); en coupant le second canal (11b, 21b) du connecteur optique à deux canaux, et en formant un nouveau second canal (11b, 41b) entre le premier (1) et le troisième (4) câbles en connectant la branche restante (41b) du troisième câble (4) avec l'autre branche (11b) du premier câble (1) devenue disponible après que l'on ait coupé ledit second canal (11b, 21b), de façon que la commutation soit effectuée sans jamais déconnecter complètement le premier câble optique (1) d'avec la ligne de communication.

2. Procédé selon la revendication 1, dans lequel:

le premier, le second et le troisième câbles optiques (1, 2, 4) sont des câbles multiconducteurs, et dans lequel on déconnecte chacun des conducteurs à fibre optique (11) du câble optique (1) d'avec le conducteur à fibre optique correspondant (21) du second câble optique (2) et on le connecte à un conducteur à fibre optique correspondant (41) du troisième câble optique (4).

3. Procédé selon la revendication 1 ou 2, dans lequel:

les branches (11a, 11b; 21a, 21b) sont constituées de deux branches de conducteur à fibre optique (11a, 11b; 21a, 21b) qui sont liées, par fusion, à chaque extrémité desdits conducteurs à fibre optique (11, 21).

4. Procédé selon la revendication 1 ou 2, dans lequel:

les branches sont constituées des canaux optiques d'un connecteur optique à branches.

5. Procédé selon la revendication 4, dans lequel:

le connecteur à deux canaux connecte chaque canal optique d'un connecteur à branches avec le canal optique correspondant d'un connecteur à branches, voisin.

6. Procédé selon la revendication 5, dans lequel:

le premier et le second canaux du connecteur à deux canaux est constitué, respectivement, d'un premier et d'un second conducteurs à fibre optique montés en barrette amovible.

7. Procédé selon la revendication 6, dans lequel:

on coupe le premier canal du connecteur à deux canaux en déconnectant le premier conducteur monté en barrette amovible d'avec le connecteur à branches du conducteur à fibre optique correspondant du second câble, et dans lequel on forme le nouveau premier canal en connectant le premier conducteur monté en barrette amovible au connecteur à branches du conducteur à fibre optique correspondant du troisième câble; et dans lequel

on coupe le second canal du connecteur à deux canaux en déconnectant le conducteur monté en barrette amovible d'avec le connecteur à branches du conducteur à fibre optique correspondant du second câble, et dans lequel on forme le nouveau second canal en connectant le second conducteur monté en barrette amovible au connecteur à branches du conducteur à fibre optique correspondant du troisième câble.

# FIG.1

(a)

(b)

(c)

# FIG.2

# FIG.3